Europäisches Patentamt

(19) European Patent Office

Office européen des brevets

(11) Publication number : **0 432 122 A2**

# EUROPEAN PATENT APPLICATION

(21) Application number : 90850391.5

(22) Date of filing : 04.12.90

(51) Int. Cl.⁵ : **G01L 5/16**

(30) Priority : 04.12.89 SE 8904082

(43) Date of publication of application :
12.06.91 Bulletin 91/24

(84) Designated Contracting States :
**DE FR GB IT SE**

(71) Applicant : SKF Nova AB
S-415 50 Göteborg (SE)

(72) Inventor : Adolfsson, Rune
Bandholtzgatan 35
S-432 52 Varberg (SE)
Inventor : Asberg, Sture
Bergtungegatan 7
S-421 58 Västra Frölunda (SE)
Inventor : Hesthamar, Tore
Stadsbudsgatan 5
S-222 36 Lund (SE)

(74) Representative : Forsberg, Lars-Ake et al
SKF NOVA AB Patent Department
S-415 50 Göteborg (SE)

(54) **Hub bearing unit for vehicles.**

(57)    A hub bearing unit for a vehicle wheel comprising a rotatable first ring connectable to the
wheel and a non-rotatable second ring connectable to the vehicle chassis. The second ring
includes a cylindrical portion and a radial flange
for connection to the vehicle chassis. A bearing
is radially disposed between the first and second rings enabling the first ring to rotate relative to the second ring about an axis of rotation.
A self-contained non-rotatable measuring unit
is secured fixedly relative to the second ring for
measuring external forces applied to the wheel.
The self-contained measuring unit comprises
an annular carrier and a plurality of force sensors fixedly connected in the carrier in predetermined   orientations   relative   to   the   axis   of
rotation. The force sensors are circumferentially spaced apart in the carrier. The carrier and
force sensors are axially insertable and removable as a unit relative to the second ring. The
carrier is molded of plastic, and the force sensors are integrally molded with the carrier. A
heat shield is disposed between the measuring
unit and the brakes of the wheel.

F I G. 3

EP 0 432 122 A2

# HUB BEARING UNIT FOR VEHICLES

## Backgroung of the Invention

The present invention refers to a hub bearing unit for vehicle wheels which is adapted to sense external forces applied to the wheel, whereby such signals can be used in mechanisms for improving the comfort or safety of the vehicle such as steering and road handling ability.

Systems for rear wheel steering of vehicles are known, wherein the steering angle of the rear wheels is automatically adjusted in accordance with the steering angle of the front wheels. The rear wheels are usually steered in the same direction as the front wheels at rather high speeds and in opposite direction to the front wheels at comparatively low speeds. The improvements obtained with this system regarding operational characteristics are relatively limited. Due to the fact that the relation between the steering angle of the front wheel and that of the rear wheels is constant, independent of the vehicle speed, it is still possible that lateral wobbling or skidding may occur as a result of bumps or friction differences in the roadway.

It therefore has been suggested to develop systems of this type which are active, i.e., wherein the condition of the roadway is detected, and signals are generated in accordance with the detected condition to correct the deflection of the wheel in question. Examples of such active systems are disclosed in British Application No. 21 53 311 and U.S. Patent No. 4,703,822. The system according to British Application 21 53 311 suggests the use of sensors for detecting the acceleration vertically or transversely, or detecting vertical load by sensing the vertical damping motion of a suspension unit. In the system according to U.S. Patent 4,703,822 it is suggested to use sensors which detect the driving conditions. These sensors thereby can comprise sensors for detecting the load on the rear wheels.

Systems have long been known for measuring torque and forces acting upon the wheels in road tests for the developing and dimensioning of components of wheels and wheel suspensions. For example, strain gauge sensors are usually used with especially designed hub units, such as shown in U.S. Patents No. 4,748,844 and No. 4,186,596. It also has been suggested to measure the roll resistance acting on the vehicle wheel by means of measuring equipment developed for laboratory purposes. In use of this known measuring equipment, an otherwise conventionally equipped motor car has been provided with two additional wheels, one of which is a test wheel and the other a dummy wheel. The test wheel is journaled in a two-part steering knuckle housing, whereby one of the parts supports the ball joints and the other of the parts is designed with the bearing seats. Twelve separate packs of piezo-electric sensors are squeezed between these two parts. A measuring system of this type using piezo-electric sensors is less suited for other applications than for test conditions, depending upon the complex and extremely accurate installation and the sensitivity to temperature.

A purpose of the present invention is to provide a hub bearing unit wherein the signals obtained when sensing the forces acting upon the wheels, are influenced to as small an extent as possible by mass inertia forces occurring during movements of the wheels and of the wheel suspension.

Another purpose of the invention is to design the hub bearing unit in such a manner that the measuring bodies forming part of the unit may be constructed, mounted and electrically connected in a simple manner.

A further purpose of the invention is to design the hub bearing unit in such a manner that sensors and electronics forming a part thereof will exhibit high reliability in service despite being exposed to potential damage due to moisture, temperature and mechanical impact.

A further purpose of the invention is to design the hub bearing unit in such a manner that a high performance is obtained when sensing the forces acting upon the wheels.

## Summary of the Invention

The present invention relates to a hub bearing unit for a vehicle wheel. The hub bearing unit comprises a rotatable first ring which is connectable to the wheel and a non-rotatable second ring which is connectable to the vehicle chassis. The second ring includes a cylindrical portion and a radial flange for connection to the vehicle chassis. A bearing is radially disposed between the first and second rings, enabling the first ring to rotate relative to the second ring about an axis of rotation. A self-contained, non-rotatable measuring unit is secured fixedly relative to the second ring for measuring external forces applied to the wheel. The self-contained measuring unit comprises an annular carrier and a plurality of force sensors fixedly connected in the carrier in predetermined orientations relative to the axis of rotation. The force sensors are circumferentially spaced apart in the carrier. The carrier and force sensors are axially insertable and removable as a unit relative to the second ring.

Preferably, the carrier is molded of plastic, the force sensors being integrally molded with the carrier.

Electrical conduits are connected to the force sensors and are preferably integrally molded with the carrier and force sensors.

It is also preferable to integrally mold with the carrier a signal processing unit to which the conduits are connected.

The carrier preferably includes through-holes for receiving bolts to secure the carrier to the second ring. The force sensors are arranged in close proximity to the bolts.

The force sensor preferably includes a strain gauge, or a film of amorphous, magneto-elastic material.

A thin heat shield, formed of a high heat dissipating material, is interposed between the measuring unit and a brake carried by the wheel.

## Brief Description of the Drawings

The objects and advantages of the invention will become apparent from the following detailed description of preferred embodiments thereof in connection with the accompanying drawings, in which like numerals designate like elements, and in which :

FIG. 1 is a perspective view of a vehicle wheel with the associated wheel suspension to which a force sensing system according to the present invention is to be attached ;

FIG. 2 is a longitudinal sectional view through a hub bearing unit taken along the line 2-2 in FIG. 3 ;

FIG. 3 is a side elevational view of the hub bearing unit ;

FIG. 4 is a fragmentary view of FIG. 3 ;

FIG. 5 is a perspective view of a measuring element according to the present invention ;

FIG. 6 is an axial view through the measuring element to which electrical windings have been added ;

FIG. 7 is a schematic view depicting the interconnection of pick-up coils, and excitation coil, and a signal processing unit according to the present invention ;

FIG. 8 is a schematic view depicting the wiring of a pick-up coil ;

FIG. 9 is a schematic view depicting the wiring of the excitation coil ;

FIGS. 10-18 are fragmentary longitudinal sectional views through a flange portion of the hub bearing unit to depict nine alternative embodiments of the measuring unit, respectively ;

FIG. 19 is a fragmentary edge view of a carrier-/bolt arrangement depicted in FIG. 18 ;

FIGS. 20 and 21 are fragmentary longitudinal sectional views taken through a wheel suspension for depicting, respectively, two alternative embodiments for mounting the measuring unit ;

FIG. 22 is a fragmentary longitudinal sectional view through a flange of a hub bearing unit, with a wheel depicted in phantom, to depict a heat shield according to the present invention ; and

FIGS. 23 and 24 are fragmentary longitudinal sectional views through a wheel suspension for depicting alternative embodiments of the heat shield.

## Detailed Description of Preferred Embodiments of the Invention

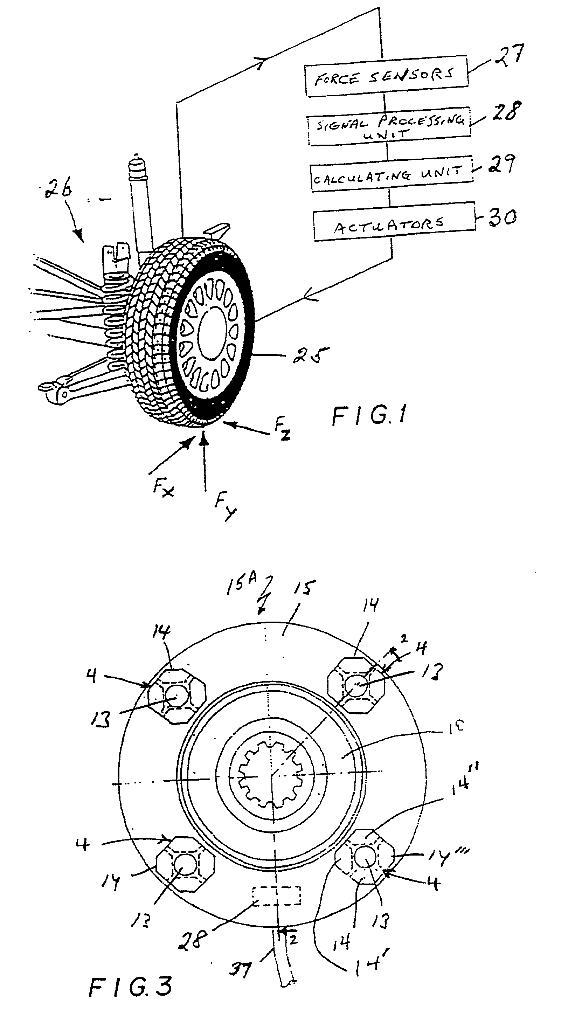

In FIG. 1 there is shown a rear vehicle wheel 25 with an associated wheel suspension 26. The wheel suspension 26 is of a conventional type and forms part of the vehicle chassis. A force acting upon the wheel 25 may be subdivided into three components $F_x$, $F_y$, $F_z$. Components $F_x$, $F_y$ lie in the plane of the wheel, whereas $F_z$ is parallel to the wheel axis.

An active system for rear wheel steering, i.e., a system where the condition of the roadway is sensed and where the different signals created thereby are used to correct the angle of the rear wheels, incorporates sensors 27 for sensing the forces acting upon the rear wheel 25, a signal processing unit 28, a calculating unit 29 such as a microprocessor, and actuators 30 connected to the wheel 25.

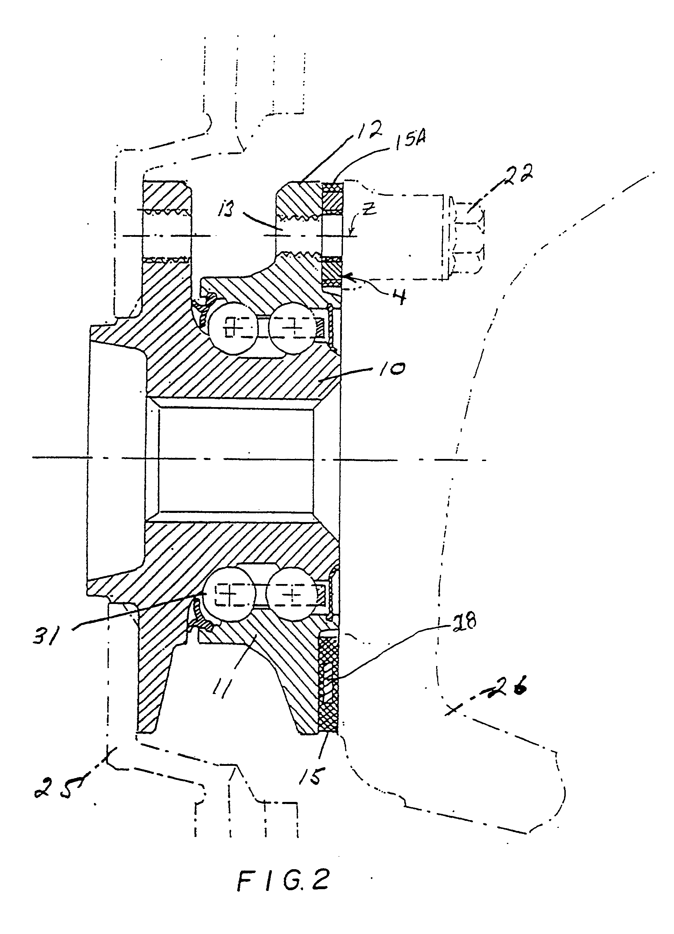

Preferably, the present invention is applied to a hub bearing unit of the type shown in FIG. 2. Such a hub bearing unit includes an inner race ring 10, an outer race ring 11 and rolling bodies 31, usually in the form of two rows of balls 31, interposed between the race rings. The inner race ring 10 could be split into two interconnected rings. The inner race ring 10, in a manner known per se, see e.g., U.S. Patent 3,589,747, is connected to the wheel 25. The outer race ring 11 is designed with a flange 12, which has four attachment holes 13 intended to receive bolts 22 by means of which the flange 12 may be connected to the chassis 26.

In order to obtain a simple, practical and reliable measurement of the forces acting upon the wheel 25, the forces are measured in accordance with the present invention on a non-rotating member. As stated above, one purpose of the invention is to provide a measuring system, wherein the signals obtained are affected to the smallest possible extent by mass inertia forces caused by motion of the wheels and wheel suspension. As the non-rotating bearing ring 11 is the part situated nearest to the roadway, the sensors are connected to the bearing ring 11.

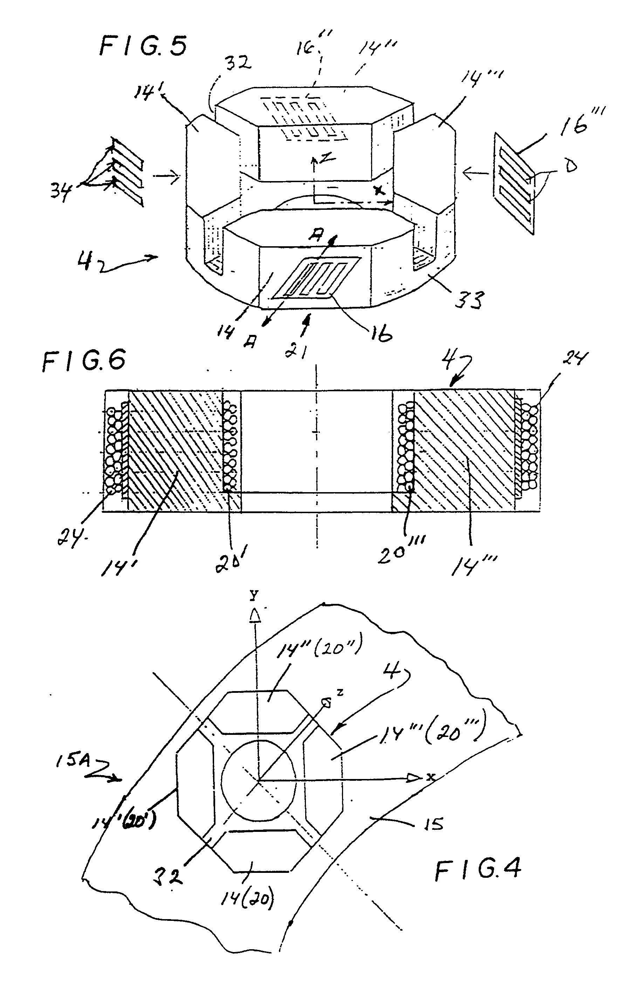

Accordingly, each of the attachment holes 13 is provided with a measuring element 4 comprising at least one, and preferably more than one, measuring body 14 (FIG. 3). Each measuring body carries a sensor element 16 arranged to sense external forces acting upon the wheel 25 (see FIG. 5). According to an important aspect of the invention, all of the measuring elements 4 (i.e., the elements 4 for all four attachment holes 13) are secured in a common carrier in the form of a ring or washer 15, the ring 15 being adapted to be fixedly connected to the flange 12 by means of the bolts 22 as depicted in FIG. 2.

The sensor elements 16 could be strain gauged, but preferably are in the form of films of an amorphous, magneto-elastic material. The sensor 16 is attached to the associated measuring body 14 by means of gluing, welding, sputtering or other appropriate securing methods. The measurement of forces is based on the known principle that the magnetic properties of the amorphous magneto-elastic material will vary with the strain of the material. It will be appreciated that the sensor 16 secured to the measuring body 14 will be subjected to strains when the flange 12 is subjected to forces.

Preferably, each measuring element 4 comprises four measuring bodies 14, 14', 14", 14'''. Those measuring bodies are spaced apart by spaces 32 and are connected to a common bottom plate 33, which is equipped with a center through-hole for the bolt 22. Sensors 16 are provided on surfaces of the measuring bodies, which surfaces are parallel to the wheel axis. The sensors 16, 16" on the measuring bodies 14, 14" are provided on surfaces or zones 21, 21", which lie in the X-Z plane (see FIG. 4). The sensors 16', 16''' on the measuring bodies 14', 14''' are provided on surfaces 21', 21''', which lie in the Y-Z plane. The easy axis of the amorphous magneto-elastic material of each sensor extends in a direction A-A, which forms an angle, preferably 45° to the Z axis. The term "easy axis" refers to the axis which requires the smallest work of an externally applied magnetic field to make the magnetic domains align themselves with the direction of the field. This work thus will be at its lowest level if the direction of the field coincides with the easy axis of the material.

An elongation of the material along this easy axis also will produce the greatest variation of the magnetic properties, i.e., the greatest sensitivity.

The domains D of the amorphous magneto-elastic material are positioned symmetrically in relation to the easy axis of the material. At saturation elongation, the domains will be parallel to the direction A-A.

Instead of comprising a one-piece film, the sensor could comprise a plurality of mutually, parallel bands 34 of amorphous magneto-elastic material (see the left side of FIG. 5), the longitudinal axes of which form the angle relative to the Z axis.

In the embodiment shown in FIG. 5, the angles between the easy axis of the amorphous magneto-elastic material and the X axis and the Y axis, respectively, which comprise parallel and mutually diametrically opposed pairs. The easy axes of diametrically opposed pairs of sensors, however, are located in opposite directions, such as shown by the sensors 16, 16" in FIG. 5.

Surrounding the measuring bodies are pick-up coils 20, 20', 20", 20''', respectively, each coil lying in a plane disposed mainly perpendicular to the Z axis.

An excitation coil 24, which is connectable to a power source, is wound around the outside of the measuring bodies to enclose all surfaces 21-21''' and pick-up coils 20-20'''. When a magnetic field generated by means of the excitation coil 24 is applied over the pick-up coils 20-20''' and the surfaces 21-21''', a current is induced in the pick-up coils which is affected by the amorphous, magneto-elastic sensors 16-16''' situated inside the coils. The output signals from the pick-up coils thus are dependent on the magnetic properties of the sensors. Since these properties vary in relation to the mechanical strain condition in the sensors, the magnitudes of the output signals from the pick-up coils are a function of the stresses prevailing in the measuring bodies 14 and consequently in the flange 12.

Since the amorphous magneto-elastic material on each of the four sensing surfaces 21-21''' has a component in the Z axis, the force F influences the sum of the output signals from all pick-up coils at all four attachment holes 13. The sensing zones 21, 21" have a component in the X axis but not in the Y axis, and the sensing zones 21', 21''' have a component in the Y axis but not in the X axis. Due to the fact that the easy axes of the diametrically opposed zones extend in opposite directions, there is a relationship between the force $F_X$ (i.e., shearing along the X axis) and the difference between the output signals from the pick-up coils 20, 20". For the same reason, there is a relationship between the force $F_y$ (i.e., shearing along the Y axis) and the difference between the output signals from the pick-up coils 20', 20'''.

By forming the sensor as a film of an amorphous, magneto-elastic material, e.g., there is obtained a high performance of the sensing of the forces acting upon the wheels.

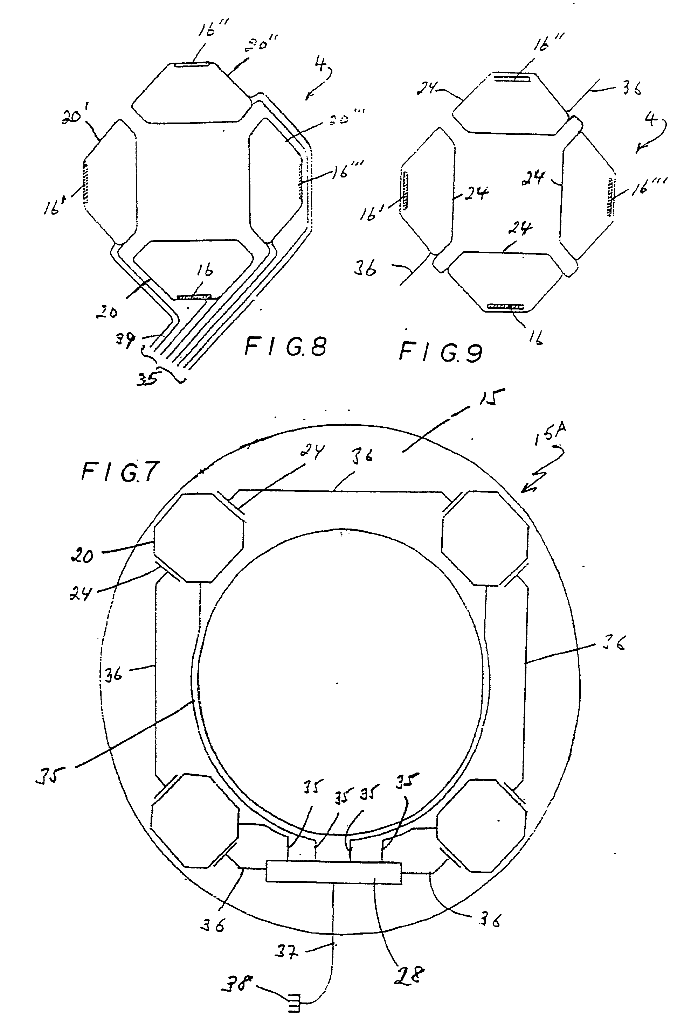

As can be seen in FIG. 8, two electrical conduits 39 are required for each of the pick-up coils 20-20'''. As four pick-up coils are provided at each measuring unit 4, eight conduits 39 are joined in a cable 35 for each measuring unit 4. Four such cables 35 are connected to the signal processing unit 28. As can be seen from FIGS. 7 and 9, the excitation coils 24 at adjacent attachment holes 13 are connected in series by means of conduits 36 and also are connected to the signal processing unit 28.

From the signal processing unit 28 a cable 37 leads to an outer connection 38, whereby the cable 37 incorporates a plurality of conduits for signals representing the forces $F_x$, $F_y$, $F_z$, respectively.

As mentioned above, according to one aspect of the invention, all measuring bodies 14 for a given wheel are provided in a common circular ring 15 to form therewith a one-piece measuring unit 15A. As can be seen in FIG. 7, this makes it possible to embed inside the ring 15 on one hand all conduits 35, 36, 37, associated with the generation of a required magnetic field over the coatings 16 and for registration of the signals generated, and on the other hand the signal processing unit 28. Consequently, a high degree of reliability is obtained in that the sensors and electronics forming part of the measuring system are protected with respect to moisture, temperature, and mechanical damage despite the fact that the hub bearing unit is exposed. It furthermore will be possible in a simple manner to assemble and electrically connect the measuring bodies forming part of the hub bearing unit.

In order to avoid strains from being generated in the ring 15, which strains could affect the sensitive measuring bodies, the ring 15 in a preferred embodiment is manufactured from a material, such as plastic, which is substantially more elastic than the measuring bodies 14. The ring is molded of the plastic material, with the measuring elements 4, the electric conduits 35-37, and the signal processing unit disposed in the mold. Hence, all of those components will be integrally molded within the ring 15 so as to be protected from impacts, adverse ambient conditions, etc. Also, all of the components can be handled as a one-piece unit with the ring itself.

In the embodiment shown, the measuring unit 4 is separate from the flange 12. It, however, is possible alternatively to design the measuring units 4 and the flange as an integral unit. It is also possible to form the flange 12 as a separate unit, which can be fixedly connected to the outer race ring 11.

In the embodiment shown, the inner race ring is connected to the wheel and the outer race ring is connected to the chassis. It is also possible, instead, to connect the outer race ring to the wheel and the inner race ring to the chassis.

In the embodiment shown, the magnetic field is generated by means of a separate excitation coil. It, however, is possible to let the pick-up coils also constitute excitation coils, avoiding the requirement for a separate excitation coil. It is further possible to use a static magnetic field, e.g., from a permanent magnet, also avoiding the requirement for a separate excitation coil.

In the embodiment shown, the easy axis of the amorphous film forms an angle of 45° with each one of the X and Y axes which gives the sensors a good sensitivity. However, that angle may vary. The easy axes of two diametrically opposed films are shown as being oriented in mutually different directions as explained earlier. The film 16 may comprise a film piece containing a plurality of domains D. Alternately, the domains may be formed by the application of separate bands 34 of amorphous, magneto-electric material (see FIG. 5).

In the embodiment shown, each measuring unit 4 comprises four measuring bodies. Other embodiments are possible. Each measuring unit could instead comprise a single annular measuring body enclosed by a pick-up coil, and, if required, an excitation coil. Amorphous bands 34 or an amorphous film 16 may thereby be arranged around the circumference of the measuring body with the bands or the magnetic dipoles respectively positioned in a suitable direction, particular in the direction of the Z axis and/or in directions perpendicular to the Z axis. The sensor arrangement as previously described may advantageously be used as a complement to every possible system for rear wheel steering of vehicles. It, however, is quite possible instead to use the sensor arrangement for correction of the deflection of the rear and/or front wheels.

The sensor arrangement described above could also preferably be used for active steering of the suspension of the vehicle for the purpose of improving the vehicle comfort and road maintenance.

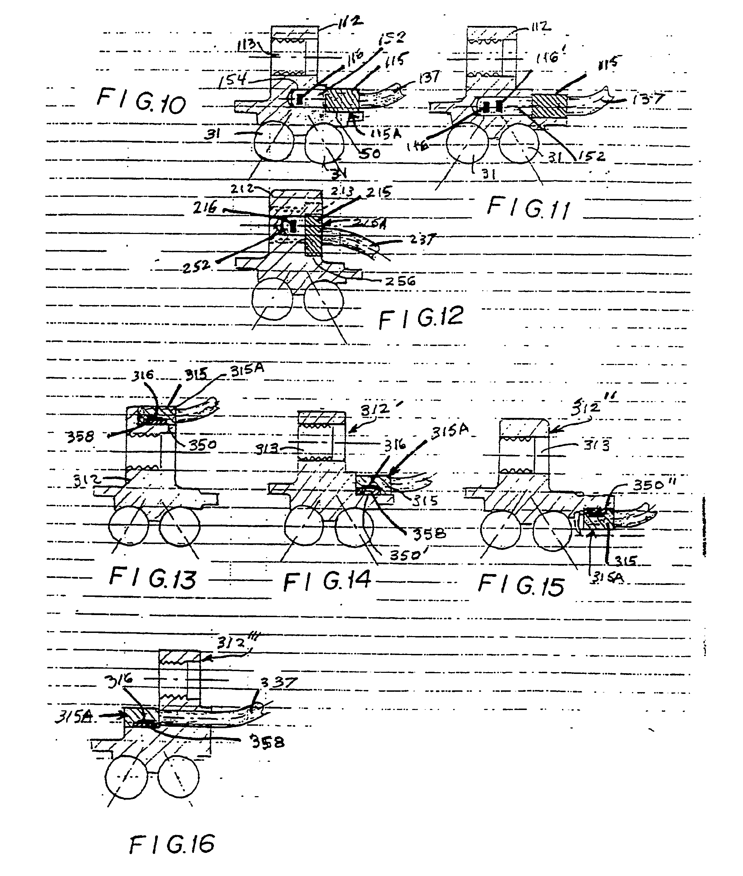

Depicted in FIGS. 10 through 24 are alternative embodiments of the present invention. In FIG. 10, a measuring unit 115A comprises a circular cylindrical ring 115 which is press-fit onto a cylindrical surface 50 of a flange 112. Projecting from an axially outer surface of the plastic ring 115 are a cylindrical projections 152 which are received in correspondingly shaped apertures 154 in the flange. Those apertures are preferably disposed close to a respective attachment hole 113. Sensors 116, e.g., four in number, are circumferentially spaced around the periphery of each projection 152. The sensors 116, which correspond to the sensors 16 described earlier, are molded in the integrally molded ring and projections, together with the required electrical conduits. An electrical cable 137 leads from the measuring unit and connects to the previously described outer connection 38. The sensors 116 are situated equidistantly from both rows of bearing balls 31 so as to measure forces from both of those rows.

In an embodiment depicted in FIG 11, the sensors 116 are disposed closer to the outer row than to the inner row, and an additional or inner set of sensors 116′ is provided which is closer to the inner row. Thus, the sensors 116, 116′ measure forces from the outer and inner rows, respectively, of the balls.

In an embodiment depicted in FIG. 12, a ring 215 is press-fit within an axially inwardly opening recess 256 in a flange 215. The ring 215 is provided with recesses (not shown) in the vicinity of the attachment holes 213 to enable attaching bolts to be inserted through those holes.

In an embodiment depicted in FIG. 13, a ring 315 of a measuring unit 315A is press-fit onto a radially outermost cylindrical surface 350 of a flange 312. Disposed in circumferentially spaced relationship around a radially inner periphery of the ring are sensors 316. The radially inner periphery is defined by an annular metallic sleeve 358 which is molded into the ring 315, along with the sensors and electrical conduits.

An embodiment depicted in FIG. 14 utilizes the afore-described measuring unit 315A, but press-fits the ring thereof onto a radially outward facing surface 350' of a flange 312', which surface is spaced axially inwardly from the attachment holes 313.

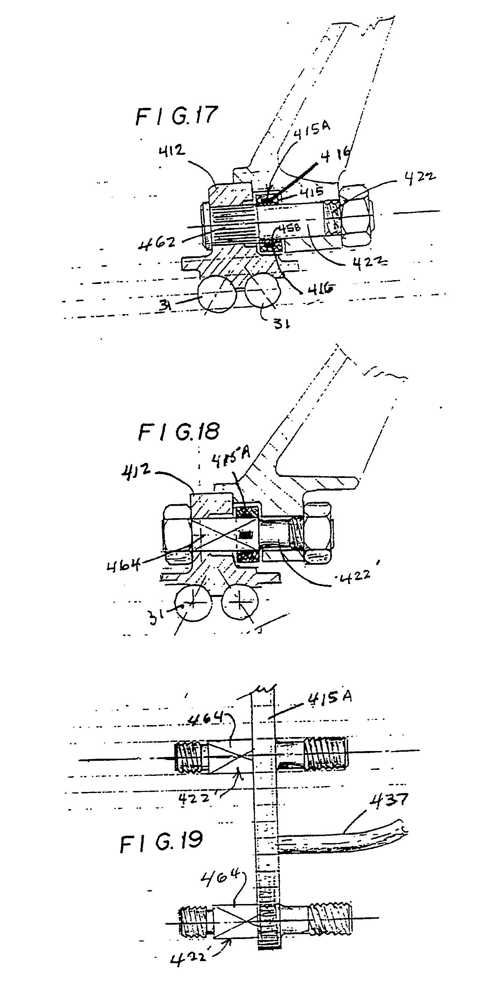

An embodiment depicted in FIG. 15 also uses the afore-described measuring unit 315A, but press fits the ring thereof to a radially inwardly facing surface 350''' of a flange 312'', which surface is spaced axially inwardly from the attachment holes 313.

In an embodiment depicted in FIG. 16, the measuring unit 315A is press-fit on a radially outwardly facing surface 350''' of a flange 312''', which surface is spaced axially outwardly of the attachment holes 313. The flange 312''' is provided with an aperture 360 trough which the electrical cable 337 extends.

In an embodiment depicted in FIG. 17 a measuring unit 415A includes a ring 415 having a plurality of holes formed therein for receiving attachment bolts 422. Each hole is formed by an annular sleeve 458, and a plurality of sensors 416 which extend circumferentially around each sleeve 458. The ring 415 is press fit onto the attachment bolts 422 themselves rather than being attached directly to the flange. The bolts 422 are prevented from rotation relative to the flange 412 by means of splines 462.

In an embodiment depicted in FIGS. 18 and 19 the measuring unit 415A are press-fit to attachment bolts 422', each of which avoids rotation relative to the flange 412 by means of a shank portion 464 of non-circular cross-section (e.g., of rectangular cross section).

In each the embodiments depicted in FIGS. 17 and 18-19, the electrical conduits molded within the plastic ring 415 are connected to a common cable 437 for the ring.

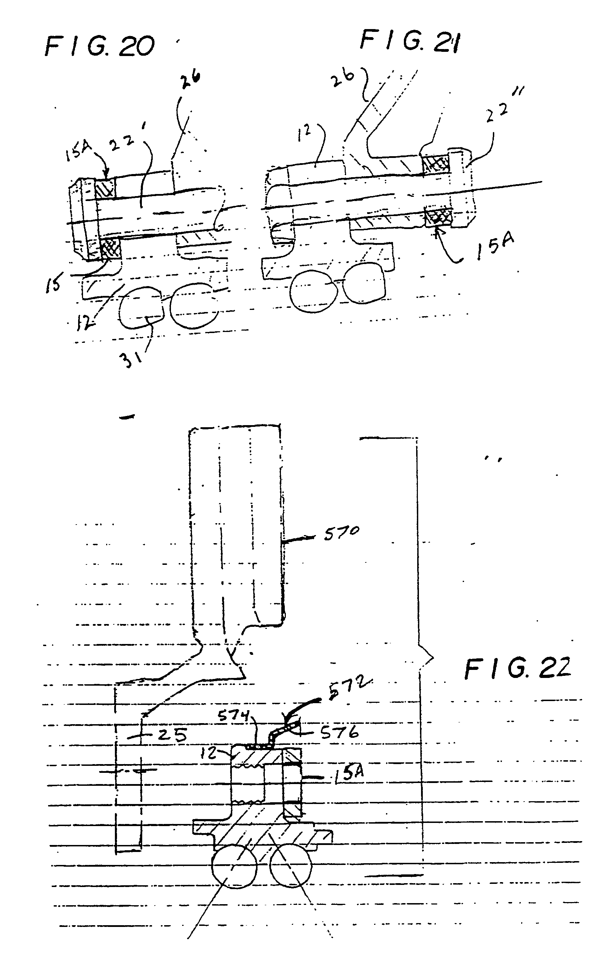

Two embodiments of the invention depicted in FIGS. 20 and 21, respectively, utilize a measuring unit 15A similar to that described earlier in connection with FIGS. 2-9, except that in FIG. 20, the ring 15 is mounted by attachment bolts 22' to the axially outer side of the flange 12. In FIG. 21, the measuring unit 15A is attached by bolts 22'' to the axially inner side of the wheel suspension 26.

It will be appreciated from FIG. 22 that the flange 12 may be mounted in close proximity to the brake pads 570, whereby heat from those brake pads presents a risk to the measuring unit 15A. In accordance with the present invention, an annular heat shield 572 is mounted on the flange between the brake pads and the measuring unit. The heat shield 572 comprises a thin metallic element which is formed of a material capable of rapidly dissipating heat. The heat shield 572 comprises a mounting portion 574 and a shielding portion 576. The mounting portion can be attached to any suitable structure such as the flange 12 (as shown) or to the wheel suspension 26 by any suitable connection such as a press-fit (as shown) or by fasteners (not shown). Alternatively, the heat shield 572'

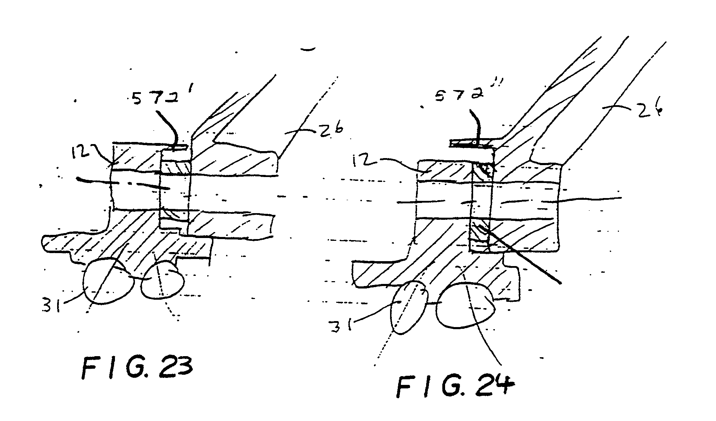

could be of integral, one-piece construction with the flange 12 as depicted in FIG. 23, or a heat shield 572'' could be integrally formed with the wheel suspension 26 as depicted in FIG. 24.

Although the present invention has been described in connection with preferred embodiments thereof, it will be appreciated by those skilled in the art that additions, modifications, substitutions, and deletions not specifically described may be made without departing from the spirit and scope of the invention as defined in the appended claims.

Claims

1. A hub bearing unit for a vehicle wheel comprising a rotatable first ring connectable to the wheel and a non-rotatable second ring connectable to the vehicle chassis, the second ring including a cylindrical portion and a radial flange for connection to the vehicle chassis, bearing means radially disposed between the first and second rings enabling the first ring to rotate relative to the second ring about an axis of rotation, and a self-contained non-rotatable measuring unit secured fixedly relative to the second ring for measuring external forces applied to the wheel, the self-contained measuring unit comprising an annular carrier and a plurality of force sensors fixedly connected in the carrier in predetermined orientations relative to the axis of rotation, the force sensors being circumferentially spaced apart in the carrier, the carrier and force sensors being axially insertable and removable as a unit relative to the second ring.

2. A hub bearing unit according to claim 1, wherein the carrier is molded of plastic, the force sensors being integrally molded with the carrier.

3. A hub bearing unit according to claim 2 including electrical conduits connected to the force sensors and being integrally molded with the carrier and force sensors.

4. A hub bearing unit according to claim 3 including a signal processing unit to which the conduits are connected, the signal processing unit being integrally molded with the carrier, the force sensors, and the conduits.

5. A hub bearing unit according to claim 1, wherein the carrier includes through-holes for receiving bolts to secure the carrier to the second ring.

6. A hub bearing unit according to claim 1, erein the first ring includes a cylindrical portion arranged telescopingly relative to the cylindrical portion of the second ring.

7. A hub bearing unit according to claim 1, wherein each force sensor includes a strain gauge.

8. A hub bearing unit according to claim 1, wherein each force sensor includes amorphous, magneto-elastic material.

9. A hub bearing unit according to claim 8, wherein the force sensor includes a measuring body having a surface oriented parallel to the axis of rotation, the amorphous magneto-elastic material being disposed on the surface and defining an easy axis oriented at an acute angle with respect to the axis of rotation, and an electrical pick-up coil wound around the body and the surface.

10. A hub bearing unit according to claim 9, wherein the measuring body comprises a part of a measuring element having four such measuring bodies each having a surface with amorphous magneto-elastic material mounted thereon, the measuring element having an attachment hole extending therethrough for receiving a fastener, the four surfaces arranged in mutually parallel pairs spaced apart diametrically with respect to the attachment hole.

11. A hub bearing unit according to claim 10 including an electrical excitation coil surrounding all of the pick-up coils for generating a magnetic field.

12. A hub bearing unit according to claim 1, wherein the carrier is connected to the second ring by a press-fit.

13. A hub bearing unit according to claim 12, wherein the carrier comprises a carrier ring and a plurality of circumferentially spaced projections extending parallel to the axis, the second ring including apertures for receiving the projections, the force sensors mounted on respective projections.

14. A hub bearing unit according to claim 13, wherein the bearing means comprises two annular rows of rotary bearing elements, the rows being spaced apart in a direction parallel to the axis, each projection including one force sensor disposed equidistantly from the two rows of rotary bearing elements.

15. A hub bearing unit according to claim 14, wherein the bearing means comprises two annular rows of rotary bearing elements, the rows being spaced apart in a direction parallel to the axis, each projection including two force sensors situated adjacent respective ones of the rows.

16. A hub bearing unit according to claim 12, wherein the carrier comprises a carrier ring having a cylindrical surface disposed coaxially to the axis, the force sensors being mounted on the cylindrical surface.

17. A hub bearing unit according to claim 1, wherein the carrier includes a plurality of attachment holes extending therethrough for receiving attachment bolts, the carrier being attached by press-fit to the attachment bolts, there being a plurality of circumferentially spaced sets of force sensors, each set extending annularly around its respective attachment bolt.

18. A hub bearing unit according to claim 1, wherein the first ring includes brake means, and a thin heat shield formed of a high heat dissipating material arranged intermediate the measuring unit and the brake means.

19. A hub bearing unit for a vehicle wheel having brake means comprising a rotatable first ring connectable to the wheel and a non-rotatable second ring connectable to the vehicle chassis, the second ring including a cylindrical portion and a radial flange for connection to the vehicle chassis, bearing means radially disposed between the first and second rings enabling the first ring to rotate relative to the second ring about an axis of rotation, measuring means secured fixedly relatively to the second ring for measuring external forces applied to the wheel, and a thin heat shield formed of a high heat dissipating material arranged intermediate the measuring means and the brake means.

| FORCE SENSORS | 27 |
| SIGNAL PROCESSING UNIT | 28 |
| CALCULATING UNIT | 29 |
| ACTUATORS | 30 |

FIG.1

FIG.3

F I G. 2

FIG.5

FIG.6

FIG.4

FIG.8

FIG.9

FIG.7

FIG. 10

FIG. 11

FIG. 12

FIG. 13

FIG. 14

FIG. 15

FIG. 16

FIG.17

FIG.18

FIG.19

EP 0 432 122 A2

FIG. 20

FIG. 21

FIG. 22

FIG. 23

FIG. 24